# EUROPEAN PATENT APPLICATION

(11) **EP 2 314 871 A2**
(43) Date of publication of application: **27.04.2011**
(21) Application number: 10183088.3
(22) Date of filing: 30.09.2010
(51) Int. Cl.: F03G 7/00

(54) **An actuator**

(30) Priority: 20.10.2009 GB 0918289
(71) Applicant: Rolls-Royce plc, London SW1E 6AT (GB)
(72) Inventor: Anthony, John, Derby, Derbyshire DE1 3AZ (GB); Buffone, Cosimo, Nottingham, Nottinghamshire NG7 4EG (GB)
(74) Representative: Barcock, Ruth Anita

(57) **Abstract**

An actuator comprises an actuator element in the form of a lamina 2 made from a shape memory material. A heating element 6 is bonded to the lamina 2 and serves to heat the lamina 2 to cause it change phase and thereby operate the actuator. The heating element 6 is encapsulated in a bonding layer 4 which is bonded to the lamina 2. The heating element 6 is made from a superelastic and/or shape memory effect material, for example an alloy such as NiTi, which exhibits superelastic properties so that the heating element 6 can follow the strain induced in the lamina 2 without being strained beyond its elastic limit.

## Description

This invention relates to an actuator which has an actuator element formed from a shape memory effect (SME) material, such as a shape memory alloy (SMA).

SMA components exhibit the property of returning to a predetermined shape when their temperature changes through a transition temperature. Typically, the component reverts to the predetermined, or "memorised" shape when heated above a transition temperature. Even if the component is deformed in the "cold" state while it is below the transition temperature, it returns to the memorised shape when heated above the transition temperature. In practice, the transformation takes place over a relatively small temperature range rather than at a precise temperature, but for general purposes the range can be referred to as the "transition temperature".

In some SME materials the inverse behaviour is possible, in which the memorised shape is assumed at temperatures below the transition temperature.

The shape memory effect is achieved by various mechanisms, many of which are well known. In the case of metallic shape memory materials such as Nitinol (NiTi), the effect is commonly achieved as a result of the transformation of the crystal structure of the alloy between austenitic and martensitic phases accompanied by twinning and de-twinning at crystal boundaries in the material.

The transition temperature of Nitinol may fall in a range extending from below 0°C to above 150°C. In the "cold" phase, i.e. below the transition temperature, Nitinol has a martensitic structure, whereas in the "hot" phase above the transition temperature it transforms to an austenitic structure. The memorised shape of the component is fixed by heating it, while held in the desired configuration, to an elevated temperature (for example about 500°C). Subsequently, if the component is reduced in temperature to below its transition temperature, it transforms to the martensitic structure, in which form it has a relatively low Young's modulus and can be deformed with a moderate force. If the component is then reheated to above the transition temperature, it reverts to the austenitic structure and to the previously memorised configuration. This transformation results in an increased Young's modulus and causes the memorised configuration to be assumed.

Thus, SMA actuators operate by inducing a large mechanical strain in a piece of SMA material. This strain (up to 8%) can be recovered by appropriate thermal cycling of the material.

Typical SMA actuator arrangements consist of an SMA element that is held in tension by an external force (such as a spring). The tension causes the SMA to strain by a pre-determined amount. This straining motion forms one half of the actuation cycle. To recover the strain the SMA is heated to above its transition temperature, at which point its microstructure changes phase. This phase transition coincides with a large increase in Young's Modulus, resulting in the SMA resisting the applied external stress and contracting to its original dimensions (in actuality the phase change, modulus change and actuator motion all occur simultaneously). This forms the other half of the actuator movement, returning it to its original position. When the temperature of the SMA is reduced back below the transition temperature its modulus falls and once again the SMA is strained by the external force, causing the actuator to repeat the cycle. Note that this form of operation is slightly counterintuitive in that the SMA is strained when *cool* and unstrained when hot. Implementations the other way around are possible.

An SMA lamina, i.e. a plate, strip or sheet of an SMA, can be formed which assumes its memorised state above the transition temperature, but can be extended below the transition temperature under an external force. W02004/113723 discloses an actuator which utilises this property to control the configuration of a medical device.

One of the key challenges in realising practical SMA actuators incorporating sheets or plates of SMA is in providing a reliable, compact and efficient heating mechanism to control the actuator state. By comparison, for actuators utilising SMA wire the heating mechanism is generally very simple - electrical current is passed directly along the wire, providing very efficient and uniform heating. For an SMA lamina, however, passing of electrical current through the SMA is much less practical for several reasons:

The cross-sectional area of the lamina (even through the length or width of the lamina) is many times greater than that of a wire (especially for large actuators such as airfoils), resulting in a very low resistance. This in turn requires a very high current (hundreds to thousands of Amps) in order to provide sufficient heating power density. Generally, high currents lead to high weights of electrical cabling, electrical equipment and power source.

Electrical current does not flow uniformly throughout the lamina area owing to point electrical contacts at either end. This results in non-uniform heating and hence undesirable actuation.

In most cases the SMA lamina will experience non-uniform heat loss over its surface area due to mechanical fastenings acting as heat sinks, variations in air temperature/airspeed etc, and edge-effects. Therefore, it is desirable to apply a customised non-uniform heat profile, which direct ohmic heating cannot provide.

In most cases the SMA lamina will be mechanically integrated into the actuator via bonding at certain points (e.g. along two opposite edges). The bond itself and the remaining actuator body are likely to be conductive material due to the nature of SMA actuator design requirements. Therefore, it is generally the case that the entire actuator is electrically continuous, making it difficult to effectively heat just the SMA lamina and leading to high losses.

To overcome these problems, a known method of heating an SMA lamina uses an electrically isolated heating element that is bonded to the lamina by a thin layer of insulating material. This is the approach described in W02004/113723. However, there are problems with this arrangement:

The insulating bond layer must experience the same strain as the SMA lamina without either detaching at the interface or failing in the material bulk

The heating element attached to - or embedded in - the bond layer will be stressed by the straining bond layer, and will itself be strained to some degree. The amount of strain will depend on the bond material type and thickness. To avoid excessive element temperatures and to achieve good substrate temperature controllability, it is desirable to provide maximum thermal coupling between the element and the SMA lamina. This can be achieved by minimising the thickness of the bond layer. However, this tends to increase the stress applied to the heating element, resulting in larger strains and hence reduced element life.

Over many cycles the repetitive strain cause by the SMA actuation will fatigue a conventional heating element, eventually leading to failure. Also, the heating element will exert very high stresses on the encapsulate as it resists being strained, which may fatigue the encapsulate material local to the element.

According to the present invention there is provided an actuator comprising an actuator element of a shape memory and/or superelastic material and a resistive heating element of a highly elastic material which is bonded to the actuator element by a flexible bonding layer.

In use of an actuator in accordance with the present invention, heating of the actuator element by the heating element causes the actuator element to undergo temperature-dependent strain.

In the context of this specification, a "highly elastic material" is a material which, at its elastic limit, can undergo strain in excess of 2% and possibly up to or in excess of 5% or 8%.

The actuator element may be in the form of a lamina. The actuator element may be made from an SMA.

The resistive heating element may consist of, comprise, or be made from an SME, for example an SMA such as Nitinol. The heating element may be in the form of a wire of a wire, an etched or stamped material such as a foil, or a sputtered or otherwise deposited pattern.

The heating element may be configured to undergo temperature-dependent strain synchronised with that of the actuator element. The bonding layer may comprise an elastomeric material, such as silicone rubber. The heating element may be encapsulated within the material of the bonding layer. The bonding layer may comprise a reinforcement material, which may be made from a highly elastic material.

The bonding layer may include a reinforcement material.

The heating element may be applied to the actuator element in a prestrained condition. When the actuator element is in an at-rest or normal operating condition, (i.e. at an ambient or unelevated temperature), the heating element may be maintained in a stressed condition by virtue of its bonding thereto. The actuator may change from an at-rest condition to an actuated condition in dependence upon heat generated by the heating element.

According to another aspect of the present invention there is provided a method of manufacturing an actuator as defined above, the method comprising the steps:
(i) applying a layer of curable or settable elastomeric material to an actuator element of an SME material;
(ii) disposing a resistive heating element of a highly elastic material on the layer of elastomeric material;
(iii) applying a second layer of the curable or settable elastomeric material over the heating element; and
(iv) causing or allowing the elastomeric material to set or cure, thereby encapsulating the heating element.

For a better understanding of the present invention, and to show more clearly how it may be carried into effect, reference will now be made, by way of example, to the accompanying drawings, in which:-
Figure 1 is a schematic representation of an actuator;
Figure 2 is a schematic representation of a method of manufacturing an actuator as shown in Figure 1;
Figure 3 is a graph of stress against temperature for an element of the actuator of Figure 1; and
Figure 4 is a graph of stress against strain for the element.

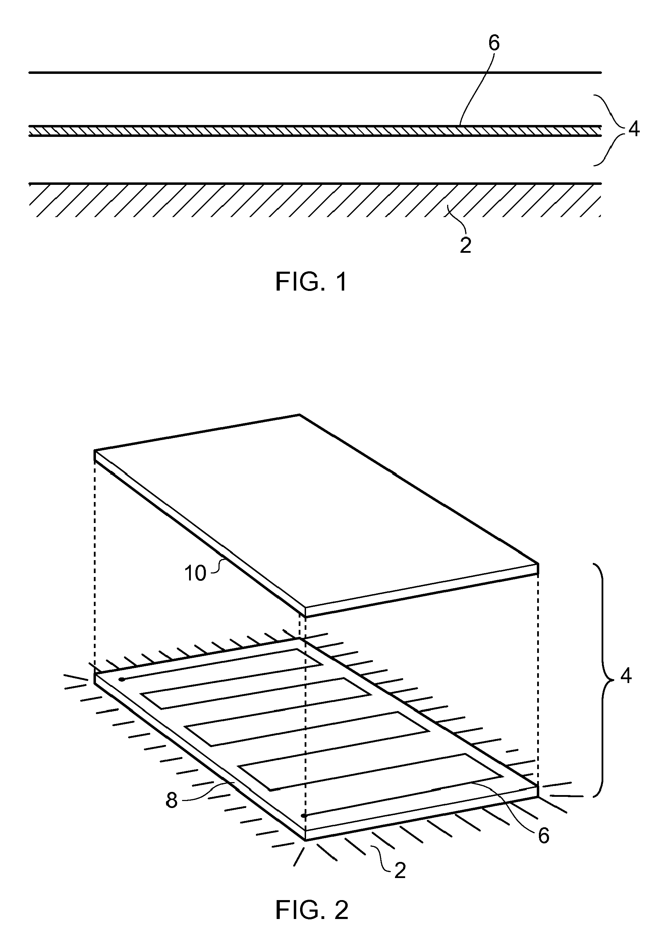

Referring to Figure 1, the actuator comprises a substrate 2 in the form of a lamina of an SMA, such as Nitinol. On one surface of the lamina 2 there is a layer of a strain-tolerant, flexible material 4 which encapsulates a heating element 6 and serves as a bonding layer to bond the heating element 6 to the substrate 2.

The heating element 6 is characterised by an ability to tolerate high levels of strain (up to 8%) over many operational cycles. The heating element 6 strain is induced by the straining of the underlying substrate 2, with the stress being transferred from the substrate 2 to the heating element 6 by the encapsulating material 4.

In one embodiment, the heating element 6 is made from a highly elastic material, such as one exhibiting superelastic and/or shape memory properties that allow it to strain in synchronism with and to the same degree as the underlying SMA substrate 2. The use of a highly elastic material provides a heating element 6 that is more reliable than a conventional copper or nickel heating element when the substrate 2 undergoes a large number of strain cycles as is typical in an actuator application.

The heating element 2 is shown in Figure 1 to be completely encapsulated by the flexible material 4. However, this is optional - the heating element could be exposed on top of the flexible material 4, which then serves principally as the bonding layer. Complete encapsulation is preferable in many environments in order to provide mechanical robustness and electrical isolation.

The heating element 2 is shown in Figure 2 laid in a conventional pattern. This is for illustration only, and it will be appreciated that many other element layouts are possible. For example, the layout of the heating element 2 could be designed to provide optimal strain tolerance or to provide non-uniform heating to the substrate in order to compensate for non-uniform heat loss.

### Heating element material

The material of the heating element 6 must be compatible with the large strains experienced by the surrounding encapsulate material 4, which are induced by the strain occurring in the substrate 2. No conventional conductors (e.g. nickel resistance wire) can tolerate strains up to the level that the encapsulate will be required to cope with, which may be up to 8%. In addition, even at lower levels of heating element strain, fatigue over a large number of cycles is likely to lead to premature failure of conventional resistive heating materials, especially at the elevated temperatures that are generated in operation of the actuator.

In a specific embodiment, the heating element 6 is made from a superelastic and/or SME material. These materials can recover from very large strains, up to 8% in the case of NiTi (Nitinol - a commonly used superelastic SME material). Even at these unusually high levels of strain, many thousands of cycles can be achieved before component failure.

The superelastic or SME heating element 6 may be constructed from wire, etched or stamped from foil, or directly deposited by spraying, sputtering or some other means onto the encapsulate material 4. The first technique is the simplest method, the second could use acid etching or stamping to form the element, and direct deposition of SMAs has been demonstrated using a Low Pressure Plasma Spraying technique.

### Encapsulate material

The choice of the encapsulate material 4 is very important in ensuring reliable operation under repeated straining of the SMA substrate 2. The encapsulate serves three main functions:
It affixes the heating element 6 to the substrate 2.

It electrically insulates the heating element 6 from the substrate 2 and/or other bodies.

It provides a mechanical link between the heating element 6 and the substrate 2, allowing the straining of the substrate to induce stress and strain in the heating element 6 itself.

The encapsulate must therefore possess the following properties:
The ability to form a strong bond to the SMA substrate 2
Tolerance to cyclic strain of up to 8% for a large number of cycles (for example tens of thousands)
Electrical insulator
Reasonable thermal conductivity

A material that exhibits all these properties is silicone rubber, which is highly flexible and an excellent electrical insulator. Thin layers of silicone rubber give sufficient electrical insulation whilst providing acceptable thermal conductivity. A preferred method of manufacture of the actuator of Figure 1 is represented in Figure 2 and comprises the following steps:
A first layer 8 of uncured silicone rubber is laid onto the SMA substrate 2;
The heating element 6 is deposited onto the silicone rubber layer 8;
A second layer 10 of uncured silicone rubber is laid on top of the heating element 6;

The assembly is vulcanised by applying heat and pressure. The silicone rubber forms a strong bond with the SMA substrate 2 by conforming to the surface micro-roughness, and the layers 8, 10 of rubber fuse to each other, encapsulating the heating element 6.

By manufacturing the heater assembly directly onto the substrate 2, the bottom layer 8 of silicone rubber can be made very thin (i.e. 0.23 mm). This maximises the thermal coupling between the heating element 6 and the substrate 2, thereby minimising the temperature that the element must reach in order to transfer sufficient heat to the SMA substrate.

It may be desirable to include reinforcement material (e.g. glass fibres) into the encapsulate material 4, to improve the overall structural integrity of the heater element 6 and to ensure robustness against mechanical impacts. However, care would need to be taken to ensure that the reinforcement material does not inhibit the strain cycling of the encapsulate 4 and/or the heating element 6. Use of superelastic material (such as NiTi wire mesh) could be employed as a strain-tolerant reinforcement.

### Actuator operation utilising superelastic material

To operate the actuator of Figure 1, an electrical current is passed through the heating element 6 to generate heat. The heat is conducted through the flexible encapsulant 4 to the SMA substrate 2 and raises its temperature above the transition temperature, causing actuator movement. The SMA substrate 2 will strain (i.e. expand) by a large amount (up to 8%) in one direction. The flexible encapsulate 4 bonded to the substrate will be strained by the substrate 2 to the same extent. The stress within the encapsulate will be passed to the embedded heating element 6, which also strains to substantially the same extent as the SMA substrate.

In other embodiments, it is possible for the actuator motion to be 'inverted', so that when heat is applied by the heater element 6 the SMA substrate 2 contracts to its original dimensions, and then when heat is removed and the substrate 2 cools, it strains by up to 8%. The type of operation depends on the configuration of the actuator.

For the heating element 6 to be able to repeatedly strain to high values and then recover to an unstrained state requires operation as either a superelastic material or an SME material. If superelastic properties are used then the material must be superelastic throughout the temperature range of the heating element 6 for the condition when the substrate 2 (and hence heating element 6) is in a strained (i.e. non-zero strain) state. This temperature range can be up to 300°C, which, although large, is not unfeasible (Co-Ni-Ga-Fe wires exhibit superelasticity from room temperature up to 200°C for example).

### Typical heating element cycle

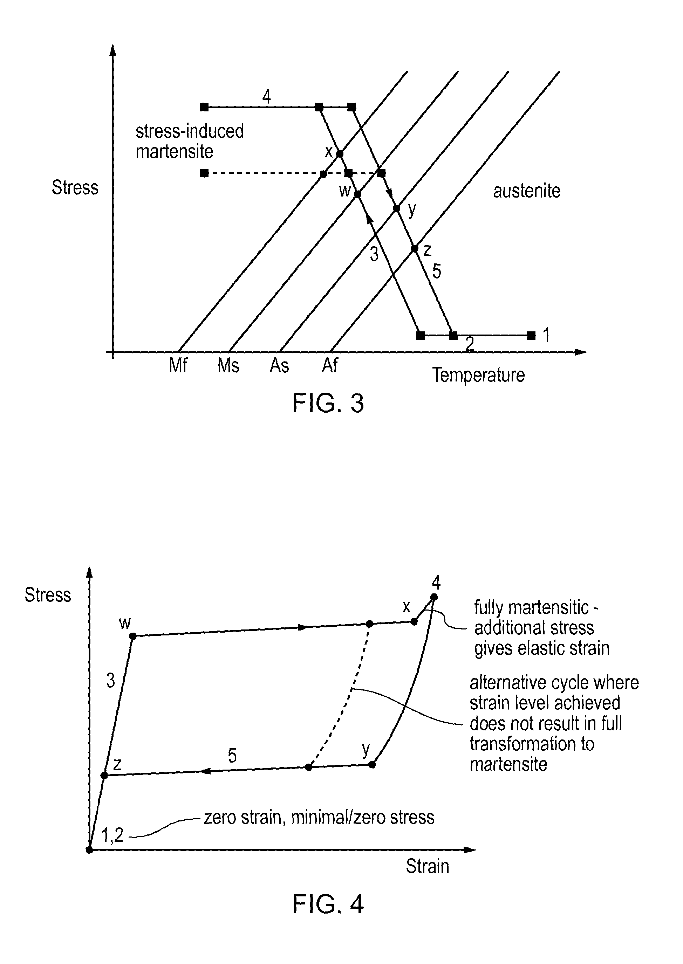

A typical operation cycle utilising a combination of the superelastic and shape memory effects is depicted in Figures 3 and 4. Note that this operation is of the 'inverted' type, where an increase in temperature is associated with a reduction in stress and strain. An example of a material that exhibits this behaviour is Nitinol.

The following standard terminology is employed in Figure 3:
- Mₛ: Martensite start temperature
- M_{f}: Martensite finish temperature
- Aₛ: Austenite start temperature
- A_{f}: Austenite finish temperature

The stages of the cycle are as follows (ignoring dashed lines):
High temperature state of actuator: substrate 2 (and hence heating element 6) unstrained. Element is at low/zero stress.
Heating element 6 turned OFF and cools along with substrate 2.

Once transformation temperature for SMA substrate 2 has been reached, the substrate will transform into its low-temperature (martensitic) phase and will simultaneously strain. This will exert stress on the heating element 6, causing it to transform and strain in synchronism. The material of the heating element 6 starts to transform from austenite to martensite at point 'w' and completes transformation at point 'x'.

Once the substrate 2 has stopped straining it will continue to cool to ambient temperature.

Upon turning heater ON, the temperature will increase until the substrate 2 starts to transform back, at which point the stress on the heating element 6 will reduce. The reduction in stress triggers a phase change back to austenite that is accompanied by complete recovery of the strain, again in synchronism with the SMA substrate 2. The material of the heating element 6 starts to transform back to austenite at point 'y' and completes transformation at point 'z'.

The hysteresis evident in Figure 3 results from the transformation temperature hysteresis exhibited by the SMA substrate 2, which is a standard feature of SMA material.

Point 'x' indicates where the material has completed transformation and is fully martensitic. Additional stress (if applied) beyond this point results in elastic strain of the martensitic form (as seen in Figure 4). It is possible to design the actuator so that the heating element 6 is never strained enough to complete transformation to martensite during straining of the substrate 2, but then it is likely to complete the transformation as the temperature drops. Such a cycle is denoted by the dashed lines in Figures 3 and 4. Variations on the cycle are possible and will be apparent to those skilled in the art.

The type of superelastic material (e.g. NiTi) and its composition will determine the material behaviour. The behaviour must be selected so that the material will operate as depicted in Figures 3 and 4, given the temperature, stress and strain envelopes that the heating element 6 must operate within.

It will be appreciated that the behaviour of the heating element 6 is primarily "stress driven" rather than "temperature driven", in that the desired straining of the heating element 6, and its transition between the austenitic and martensitic phases, follows the applied stress from the encapsulate 4 (whose deformation is driven by the underlying SMA substrate 2). The variation in element temperature is merely a complicating factor in the overall element material cycle, necessitating more careful design to ensure that the element is in the correct phase at any particular stress and temperature combination. In other words the superelastic behaviour of the heating element 6 would occur even if its temperature were static. In this case, the cycle would follow a vertical line in Figure 4 (i.e. exhibiting purely superelastic behaviour).

The mechanism underlying the present invention is thus substantially different from those which exploit purely the shape-memory effect to achieve strain recovery, such as mechanisms where the SMA component (e.g. a heating element) can be deformed whilst cold, and then when heated returns to its original shape under zero applied stress.

In the present invention, it is primarily the stress applied to the heating element 6 by the strain of the substrate 2 which causes the transformation between the austenitic and martensitic phases.
Because the strain in the SMA substrate 2 can be passed to the heating element 6 without reducing the life of the heating element 6, the intermediate flexible insulation layer 8 can be very thin because it does not have to "absorb" the strain. This maximises thermal coupling between the heating element 6 and the SMA substrate 2, thereby improving the correlation between element temperature and substrate temperature. This enables better temperature control of the substrate/actuator and permits also a reduction in the peak temperature of the heating element, which saves power and improves overall assembly lifetime, since fatigue failure rates tend to increase with temperature. Furthermore, failure at the connection between the heating element 6 and the electrical lead (typically copper) through which electrical power is supplied can be reduced. Such failure is common in conventional heating mats, and is attributed to the thermal gradient across the joint. A reduction in heating element peak temperature will directly lessen this thermal gradient and extend heater lifetime.

Although the example of operation described above utilises the superelastic effect, a related method of operation utilising the shape memory effect (SME) in either 'one-way' or 'two-way' mode could be employed to create a strain-tolerant heating element 6. Such implementations could utilise a prestress applied to the heating element 6 during the manufacturing process described with reference to Figure 2 to generate the desired behaviour. The overall requirement is simply that the strain of the heating element is synchronised with that of the substrate. Consequently, the heating element 6 would be configured so that it undergoes thermally induced strain at the same temperature as the substrate 4, and of substantially the same magnitude.

A range of materials exhibit superelastic and/or shape memory effect properties. Whilst NiTi (Nitinol) is the most commonly employed material, there are many others, including polymers, which could be utilised to perform the desired function.

An alternative highly elastic strain-tolerant heating element material could be a conductive rubber or polymer, such as carbon-loaded silicone rubber. Although this type of material does not utilise superelastic or shape memory properties to accommodate the large strain, it is nonetheless an implementation which could offer the same macroscopic behaviour.

To reduce maintenance costs it may be possible to incorporate multiple heating elements 6 in a single assembly, with one element acting as a backup in case of primary element failure. Thus, the multiple elements would be encapsulated in the same body of encapsulant 4. Manual or automatic/electronic reconnection of the power leads from the primary element to the backup element could be used. Manual reconnection may be desirable in some applications in order to reduce cost, weight and complexity. The added cost of manufacturing a backup element into the package is likely to be lower than the cost of repairing the heater element 6, which may require complete removal and re-fabrication of the assembly onto the substrate.

Detecting failure of the heating element could be eased by incorporating markings on the top surface of the heater assembly (such as a cross). Failure of the element to strain (whether induced by the substrate strain or designed to be independent) will result in no deformation of the markings, clearly visible by eye. Alternatively, polymers whose colours change in response to stress could be included in the encapsulate material (such as those that change their fluorescing colour under UV light) so that irregularities (indicating potential imminent failure) and/or failures can be spotted during inspection.

## Claims

1. An actuator comprising an actuator element (2) of an SME material and a resistive heating element (6) of a highly elastic material which is bonded to the actuator element (2) by a flexible bonding layer (4) for causing selective actuation of said actuator element (2).

2. An actuator as claimed in claim 1, in which the actuator element (2) is in the form of a lamina.

3. An actuator as claimed in claim 1 or 2, in which the actuator element (2) is made from an SMA material.

4. An actuator as claimed in any one of the preceding claims, in which the heating element (6) is made from an electrically conductive elastomeric material.

5. An actuator as claimed in any one of claims 1 to 3, in which the heating element (6) is made from a shape memory material exhibiting SME and/or superelastic properties.

6. An actuator as claimed in any preceding claim, in which the heating element (6) is made from an SMA material.

7. An actuator as claimed in claim 6, in which the heating element (6) is formed substantially of NiTi alloy.

8. An actuator as claimed in claim 6 or 7, in which the heating element (6) is in the form of a wire or deposited material pattern.

9. An actuator as claimed in any one of claims 5 to 8, in which the heating element (6) is configured to undergo a stress and/or temperature induced strain cycle substantially in synchronisation with that of the actuator element (6).

10. An actuator as claimed in any one of claims 5 to 8, in which the heating element (6) is configured to undergo a strain cycle wherein the temperature is synchronised with that of the actuator element (2) and the strain is substantially inversely synchronised with that of the actuator element.

11. An actuator as claimed in claims 9 or 10 where the strain inducing stress is applied to the heating element (6) from the actuator element (2) or a substrate thereof via the flexible bonding layer (4).

12. An actuator as claimed in any one of the preceding claims, in which the bonding layer (4) comprises an elastomeric material.

13. An actuator as claimed in claim 12, in which the bonding layer (4) comprises a silicone rubber.

14. An actuator as claimed in any one of the preceding claims, in which the heating element (6) is encapsulated in the material of the bonding layer (4).

15. An actuator as claimed in any one of the preceding claims, in which the heating element (6) is applied to the actuator element (2) in a pre-stressed condition.

16. A method of manufacturing an actuator, the method comprising the steps:
(i) applying a layer (8) of curable or settable elastomeric material to an actuator element (2) of an SME material;
(ii) disposing a resistive heating element (6) of a highly elastic material on the layer of elastomeric material;
(iii) applying a second layer (10) of the curable or settable elastomeric material over the heating element (6); and
(iv) causing or allowing the elastomeric material (4) to set or cure, thereby encapsulating the heating element.
